# EUROPÄISCHE PATENTSCHRIFT

(11) **EP 1 979 837 B1**
(45) Veröffentlichungstag und Bekanntmachung des Hinweises auf die Patenterteilung: **27.02.2019**
(21) Anmeldenummer: 06841637.9
(22) Anmeldetag: 27.12.2006
(51) Int. Cl.: G06F 17/30

(54) **VERFAHREN ZUR AUSGABE VON DATENSÄTZEN UND VORRICHTUNG HIERFÜR**
METHOD FOR OUTPUTTING DATA RECORDS, AND APPARATUS THEREFOR
PROCEDE ET DISPOSITIF POUR LA SORTIE DE JEUX DE DONNÉES

(30) Priorität: 17.01.2006 DE 102006002113
(43) Veröffentlichungstag der Anmeldung: 15.10.2008
(73) Patentinhaber: Robert Bosch GmbH, 70442 Stuttgart (DE)
(72) Erfinder: KREWER, Joerg, 30982 Pattensen (DE); LUEER, Stefan, 31139 Hildesheim (DE); OSMERS, Ralf, 31139 Hildesheim (DE); WALKLING, Uwe, 31035 Barfelde (DE); ZOSEL, Andreas, 31137 Hildesheim (DE); LISTLE, Holger, 31141 Hildesheim (DE)
(86) Internationale Anmeldenummer: PCT/EP2006/070230
(87) Internationale Veröffentlichungsnummer: WO 2007/082632

(56) Entgegenhaltungen:
- EP-A- 0 623 870
- EP-A- 1 158 794
- GB-A- 2 367 157
- US-A- 6 081 803

## Beschreibung

### Technisches Gebiet

Die Erfindung betrifft ein Verfahren zur Ausgabe von Datensätzen auf Grundlage von von einem Bediener eingegebenen Eingangsdatensätzen und eine Vorrichtung hierfür.

### Stand der Technik

Insbesondere bei Navigationssystemen für Kraftfahrzeuge mit digitalen Karten werden Datenbanken verwendet, welche beispielsweise Zielinformationen als Datensätze enthalten. Bei Navigationssystemen sind als solche Datensätze beispielsweise verschiedene geografische Objekte abgelegt, die von einem Bediener ausgewählt werden können, wobei der Bediener dazu Eingangsdatensätze eingibt, um aus der Menge der Datensätze die für ihn interessanten Datensätze auszufiltern oder auszuwählen.

Besonders wichtig ist bei Navigationssystemen die Eingabe von Informationen als Eingangsdatensätze durch den Bediener um einen oder mehrere dazu passende Zieldatensätze ausgegeben zu bekommen, um daraus ein beabsichtigtes Ziel wählen zu können. Typischerweise wird diese Funktion von Navigationssystemen durch die Verwendung eines Verzeichnisses oder mehrerer Verzeichnisse realisiert. Ein Verzeichnis ist dabei eine sekundäre Datenstruktur mit dem Ziel, den Zugang zu anderen primären Datenstrukturen der gleichen Datenbank zu beschleunigen. Dabei gibt es eine Anzahl von Möglichkeiten, solche Verzeichnisse zu generieren, wie beispielsweise eine Baumstruktur.

Ein Beispiel für ein Verzeichnis ist bei Navigationssystemen das "Punkt des Interesses"-Verzeichnis, welches ein Namensverzeichnis für solche "Punkte des Interesses" (POI) ist. Datenbanken von Navigationssystemen können Millionen solcher Punkte des Interesses als jeweilige Datensätze beinhalten. Daher ist es ein Interesse des Bedieners, dass aus der großen Anzahl der abgespeicherten Punkte des Interesses schnell der Punkt des Interesses ausgewählt wird, welcher vom Bediener gesucht wird. Dies kann dadurch erfolgen, dass aufgrund der vom Bediener eingegebenen Eingangsdaten alle Datenbankinhalte durchsucht werden. Dies dauert aber relativ lange, so dass dies für den Bediener nicht zielführend ist. Daher sind die POI-Daten in derzeitigen Navigationssystemen zusätzlich noch in einem globalen Namensverzeichnis enthalten, welches die Namen mit den Punkten des Interesses verknüpft, welche diesen Namen zumindest teilweise aufweisen.

In derzeitigen Navigationssystemen werden Datensätze, wie Punkte des Interesses in einer Region oder einem Land, mittels eines Suchkriteriums gesucht. Dabei ist ein solches Suchkriterium beispielsweise der Name. Daher sind Namen aller Datensätze in einem Verzeichnis mit Baumstruktur gespeichert. Allerdings wäre es wünschenswert, wenn die Datensätze zusätzlich bezüglich anderer Filterkriterien filterbar wären, wie beispielsweise nach einer "Punkt des Interesses"-Kategorie (POI-Kategorie). Dazu wäre jedoch für das andere Filterkriterium eine andere Baumstruktur notwendig, was jedoch bedeuten würde, dass eine Gesamtsuche über alle Datensätze in einer akzeptablen Zeit nicht mehr möglich wäre, weil alle Baumstrukturen kombiniert werden müssten.

### Darstellung der Erfindung, Aufgabe, Lösung, Vorteile

Aufgabe der Erfindung ist es, ein Verfahren zu schaffen, das eine schnelle Suche und Ausgabe von Datensätzen auf Grundlagen von von einem Bediener eingegebenen Eingangsdatensätzen erlaubt, sowie eine Vorrichtung hierfür.

Erfindungsgemäß wird die Aufgabe bezüglich des Verfahrens gemäß den Merkmalen von Anspruch 1 erreicht. Die Aufgabe bezüglich der Vorrichtung wird gemäß den Merkmalen von Anspruch 11 erreicht.

Aus der EP 0 623 870 A2 ist ein Verfahren zur Menüführung mit einer Hierachiestruktur bekannt.

Die EP 1 158 794 A beschreibt bereits ein Verfahren, das von einer dynamischen Menüführung für Multimediaanwendungen ausgeht.

GB 2367157 A beschreibt ein Verfahren mit zusätzlich zur Suche verwendeten Attributen.

Vorteilhafte Weiterbildungen sind in den jeweiligen Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine Baumstruktur nach dem Stand der Technik;
- Fig. 2: eine Baumstruktur nach dem Stand der Technik;
- Fig. 3: eine Baumstruktur gemäß einem erfindungsgemäßen Verfahren;
- Fig. 4: eine Baumstruktur gemäß einem erfindungsgemäßen Verfahren;
- Fig. 5: eine Baumstruktur gemäß einem erfindungsgemäßen Verfahren; und
- Fig. 6: eine schematische Darstellung einer erfindungsgemäßen Vorrichtung.

### Bevorzugte Ausführung der Erfindung

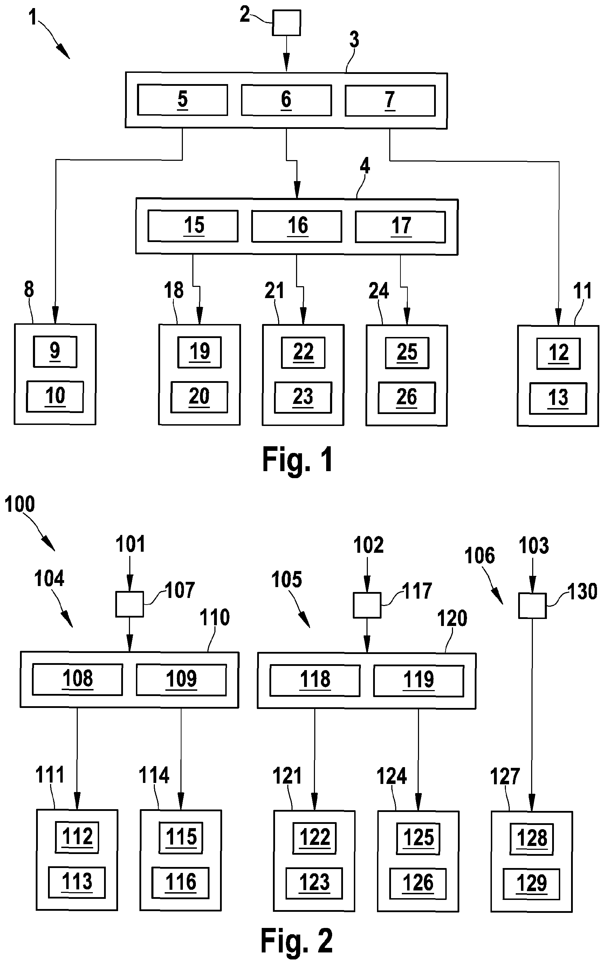

Die Figur 1 zeigt schematisch eine Baumstruktur 1 nach dem Stand der Technik. Diese Baumstruktur 1 stellt eine suchkriteriumsbasierte Baumstruktur dar, bei welcher bei einer Eingabe eines Eingangsdatensatzes 2 in Knoten 3,4 Suchkriterien angewendet werden um einen Ergebnisdatensatz oder Ergebnisdatensätze zu ermitteln. Im Knoten 3 sind drei Suchkriterien 5,6,7 hinterlegt, welche auf den Eingangsdatensatz angewendet werden.

Erfüllt der Eingangsdatensatz 2 das Suchkriterium 5, so wird als Ergebnis zum Knoten 8 mit dem Ergebnisdatensatz 9,10 weitergeleitet. Der Knoten 8 weist dabei die Namensinformation 9, die als Name_1 bezeichnet ist, und eine zusätzliche Information 10 auf, die als Information_1 bezeichnet ist.

Erfüllt der Eingangsdatensatz das Suchkriterium 7, so wird als Ergebnis zum Knoten 11 mit dem Ergebnisdatensatz 12,13 weitergeleitet. Der Knoten 11 weist dabei die Namensinformation 12, die als Name_5 bezeichnet ist, und eine zusätzliche Information 13 auf, die als Information_2 bezeichnet ist.

Erfüllt der Eingangsdatensatz 2 das Suchkriterium 6, so wird als Ergebnis zum Knoten 4 weitergeleitet, in welchem wiederum drei Suchkriterien 15,16,17 vorliegen und angewendet werden.

Erfüllt der Eingangsdatensatz auch das Suchkriterium 15, so wird als Ergebnis zum Knoten 18 mit dem Ergebnisdatensatz 19,20 weitergeleitet. Der Knoten 18 weist dabei die Namensinformation 19, die als Name_2 bezeichnet ist, und eine zusätzliche Information 20 auf, die als Information_2 bezeichnet ist.

Erfüllt der Eingangsdatensatz auch das Suchkriterium 16, so wird als Ergebnis zum Knoten 21 mit dem Ergebnisdatensatz 22,23 weitergeleitet. Der Knoten 21 weist dabei die Namensinformation 22, die als Name_3 bezeichnet ist, und eine zusätzliche Information 23 auf, die als Information_3 bezeichnet ist.

Erfüllt der Eingangsdatensatz auch das Suchkriterium 17, so wird als Ergebnis zum Knoten 24 mit dem Ergebnisdatensatz 25,26 weitergeleitet. Der Knoten 24 weist dabei die Namensinformation 25, die als Name_4 bezeichnet ist, und eine zusätzliche Information 26 auf, die als Information_1 bezeichnet ist.

Es ist somit erkennbar, dass als Ergebnis zwei Datensätze ermittelbar sind, die eine zusätzliche Information Information_1 aufweisen, zwei Datensätze, die eine zusätzliche Information Information_2 aufweisen und ein Datensatz, der eine zusätzliche Information Information_3 aufweist. Es ist aber nicht möglich, als weiteres Kriterium die zusätzliche Information einzugeben, so dass eine diesbezügliche Filterung stattfinden kann.

Die Figur 2 zeigt eine Baumstruktur 100, die als suchkriteriumsbasierte Baumstruktur dargestellt ist, wobei die Baumstruktur 100 basierend auf zusätzlichen Informationen 101,102,103 in unterschiedliche Baumteilstrukturen 104,105,106 aufgeteilt ist.

Erfüllt der Eingangsdatensatz 107 in der Baumteilstruktur 104 das Suchkriterium 108 von Knoten 110, so wird als Ergebnis zum Knoten 111 mit dem Ergebnisdatensatz 112,113 weitergeleitet. Der Knoten 111 weist dabei die Namensinformation 112, die als Name_1 bezeichnet ist, und eine zusätzliche Information 113 auf, die als Information_1 bezeichnet ist.

Erfüllt der Eingangsdatensatz 107 in der Baumteilstruktur 104 das Suchkriterium 109 von Knoten 110, so wird als Ergebnis zum Knoten 114 mit dem Ergebnisdatensatz 115,116 weitergeleitet. Der Knoten 114 weist dabei die Namensinformation 115, die als Name_4 bezeichnet ist, und eine zusätzliche Information 116 auf, die als Information_1 bezeichnet ist.

Erfüllt der Eingangsdatensatz 117 in der Baumteilstruktur 105 das Suchkriterium 118 von Knoten 120, so wird als Ergebnis zum Knoten 121 mit dem Ergebnisdatensatz 122,123 weitergeleitet. Der Knoten 121 weist dabei die Namensinformation 122, die als Name_2 bezeichnet ist, und eine zusätzliche Information 123 auf, die als Information_2 bezeichnet ist.

Erfüllt der Eingangsdatensatz 117 in der Baumteilstruktur 105 das Suchkriterium 119 von Knoten 120, so wird als Ergebnis zum Knoten 124 mit dem Ergebnisdatensatz 125,126 weitergeleitet. Der Knoten 124 weist dabei die Namensinformation 125, die als Name_5 bezeichnet ist, und eine zusätzliche Information 126 auf, die als Information_2 bezeichnet ist.

Erfüllt der Eingangsdatensatz 130 in der Baumteilstruktur 106 die Vorgabe der Baumteilstruktur 106, also die zusätzliche Information 103, so wird als Ergebnis zum Knoten 127 mit dem Ergebnisdatensatz 128,129 weitergeleitet. Der Knoten 127 weist dabei die Namensinformation 128, die als Name_3 bezeichnet ist, und eine zusätzliche Information 129 auf, die als Information_3 bezeichnet ist.

Solche Baumstrukturen 100 sind allerdings für die globale Suche weniger geeignet, da dann aller Baumteilstrukturen durchsucht werden müssten, was sehr zeitaufwändig wäre.

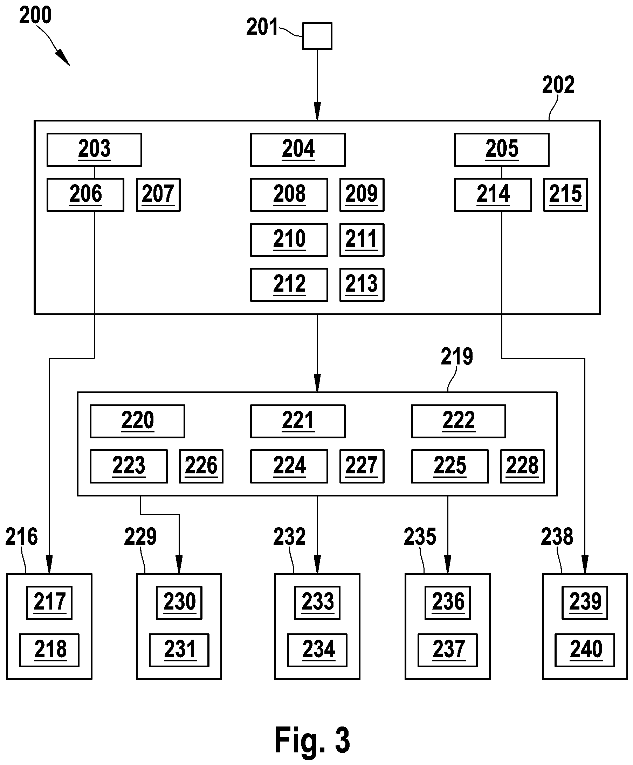

In Figur 3 ist eine erfindungsgemäße Baumstruktur dargestellt. In dieser Baumstruktur 200 ist in jedem Knoten eine weitere Filterinformation für die gesuchte zusätzliche Information verfügbar. Der Eingangsdatensatz 201 wird auf den Knoten 202 angewendet, welcher die Suchkriterien 203, 204 und 205 aufweist. Den Suchkriterien 203, 204 und 205 sind weitere Filterinformationen 206, 208, 210, 212, 214 zugeordnet, wobei den Filterinformationen weiterhin eine Anzahl 207, 209, 211, 213, 215 von Suchkriterien bzw. Filterinforationen im darunter liegenden Knoten zugeordnet sind.

Ist das Suchkriterium 203 und die Filterinformation 206 erfüllt, so wird als Ergebnis zum Knoten 216 mit dem Ergebnisdatensatz 217,218 weitergeleitet. Der Knoten 216 weist dabei die Namensinformation 217, die als Name_1 bezeichnet ist, und eine zusätzliche Information 218 auf, die als Information_1 bezeichnet ist. Die Information 218 entspricht dann der Filterinformation 206.

Ist das Suchkriterium 204 und eine der Filterinformationen 208, 210, 212 erfüllt, so wird als Ergebnis zum Knoten 219 weitergeleitet. Dieser Knoten 219 weist die Suchkriterien 220, 221 und 222 auf. Den Suchkriterien 220, 221 und 222 sind weitere Filterinformationen 223, 224 und 225 zugeordnet, wobei den Filterinformationen weiterhin eine Anzahl 226, 227 und 228 von Suchkriterien bzw. Filterinforationen im darunter liegenden Knoten zugeordnet sind.

Dabei sind jedoch die Filterinformationen 208 und 225 gleich bzw. die Filterinformationen 210 und 223 bzw. die Filterinformationen 212 und 224.

Erfüllt der Eingangsdatensatz 201 auch das Suchkriterium 220 mit der Filterinformation 223, so wird zum Knoten 229 weitergeleitet. Der Knoten 229 weist dabei die Namensinformation 230, die als Name_2 bezeichnet ist, und eine zusätzliche Information 231 auf, die als Information_2 bezeichnet ist. Die Information 231 entspricht dann der Filterinformation 223.

Erfüllt der Eingangsdatensatz 201 auch das Suchkriterium 221 mit der Filterinformation 224, so wird zum Knoten 232 weitergeleitet. Der Knoten 232 weist dabei die Namensinformation 233, die als Name_3 bezeichnet ist, und eine zusätzliche Information 234 auf, die als Information_3 bezeichnet ist. Die Information 234 entspricht dann der Filterinformation 224.

Erfüllt der Eingangsdatensatz 201 auch das Suchkriterium 222 mit der Filterinformation 225, so wird zum Knoten 235 weitergeleitet. Der Knoten 235 weist dabei die Namensinformation 236, die als Name_4 bezeichnet ist, und eine zusätzliche Information 237 auf, die als Information_1 bezeichnet ist. Die Information 237 entspricht dann der Filterinformation 225.

Erfüllt der Eingangsdatensatz 201 das Suchkriterium 205 mit der Filterinformation 214, so wird zum Knoten 238 weitergeleitet. Der Knoten 238 weist dabei die Namensinformation 239, die als Name_5 bezeichnet ist, und eine zusätzliche Information 240 auf, die als Information_2 bezeichnet ist. Die Information 240 entspricht dann der Filterinformation 214.

Somit werden neben den Suchkriterien auch sogenannte zusätzliche Informationen bei der Datenausgabe berücksichtigt.

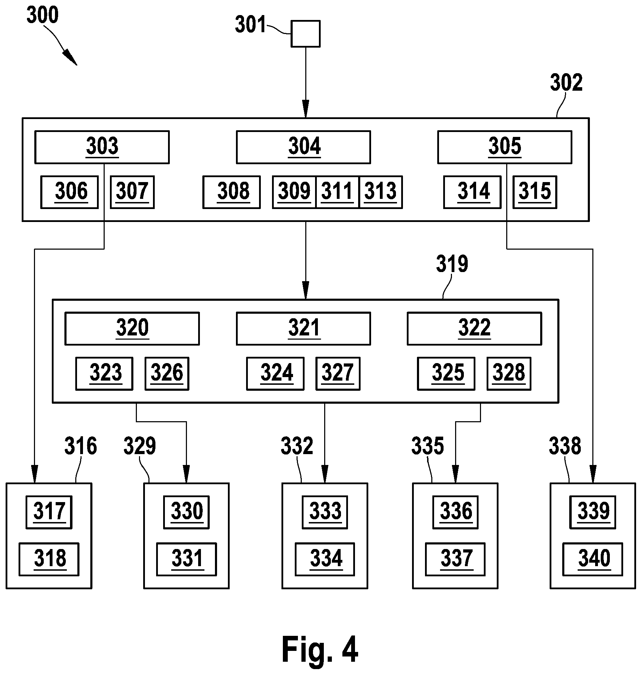

Gemäß einem weiteren erfindungsgemäßen Ausführungsbeispiel kann ein Verfahren auch gemäß der Figur 4 dargestellt werden. Die Figur 4 zeigt eine Baumstruktur 300. In dieser Baumstruktur 300 ist in jedem Knoten eine weitere Filterinformation für die gesuchte zusätzliche Information verfügbar, wobei die Filterinformation als Bitmaske dargestellt ist. Der Eingangsdatensatz 301 wird auf den Knoten 302 angewendet, welcher die Suchkriterien 303, 304 und 305 aufweist. Den Suchkriterien 303, 304 und 305 sind weitere Filterinformationen zugeordnet, die als Bitmaske 306, 308 und 314 dargestellt sind, wobei den Filterinformationen weiterhin eine Anzahl 307, 309, 311, 313 und 315 von Suchkriterien bzw. Filterinforationen im darunter liegenden Knoten zugeordnet sind.

Ist das Suchkriterium 303 und die Filterinformation mit Bitmaske 306 erfüllt, so wird als Ergebnis zum Knoten 316 mit dem Ergebnisdatensatz 317,318 weitergeleitet. Der Knoten 316 weist dabei die Namensinformation 317, die als Name_1 bezeichnet ist, und eine zusätzliche Information 318 auf, die als Information_1 bezeichnet ist. Die Information 318 entspricht dann der Filterinformation mit Bitmaske 306.

Ist das Suchkriterium 304 und eine der Filterinformationen gemäß Bitmaske 308 erfüllt, so wird als Ergebnis zum Knoten 319 weitergeleitet. Dieser Knoten 319 weist die Suchkriterien 320, 321 und 322 auf. Den Suchkriterien 320, 321 und 322 sind weitere Filterinformationen als Bitmaske 323, 324 und 325 zugeordnet, wobei den Filterinformationen weiterhin eine Anzahl 326, 327 und 328 von Suchkriterien bzw. Filterinforationen im darunter liegenden Knoten zugeordnet sind.

Erfüllt der Eingangsdatensatz 301 auch das Suchkriterium 320 mit der Filterinformation als Bitmaske 323, so wird zum Knoten 329 weitergeleitet. Der Knoten 329 weist dabei die Namensinformation 330, die als Name_2 bezeichnet ist, und eine zusätzliche Information 331 auf, die als Information_2 bezeichnet ist. Die Information 331 entspricht dann der Filterinformation als Bitmaske 323.

Erfüllt der Eingangsdatensatz 301 auch das Suchkriterium 321 mit der Filterinformation als Bitmaske 324, so wird zum Knoten 332 weitergeleitet. Der Knoten 332 weist dabei die Namensinformation 333, die als Name_3 bezeichnet ist, und eine zusätzliche Information 334 auf, die als Information_3 bezeichnet ist. Die Information 334 entspricht dann der Filterinformation als Bitmaske 324.

Erfüllt der Eingangsdatensatz 301 auch das Suchkriterium 322 mit der Filterinformation als Bitmaske 325, so wird zum Knoten 335 weitergeleitet. Der Knoten 335 weist dabei die Namensinformation 336, die als Name_4 bezeichnet ist, und eine zusätzliche Information 337 auf, die als Information_1 bezeichnet ist. Die Information 337 entspricht dann der Filterinformation als Bitmaske 325.

Erfüllt der Eingangsdatensatz 301 das Suchkriterium 305 mit der Filterinformation als Bitmaske 314, so wird zum Knoten 338 weitergeleitet. Der Knoten 338 weist dabei die Namensinformation 339, die als Name_5 bezeichnet ist, und eine zusätzliche Information 340 auf, die als Information_2 bezeichnet ist. Die Information 340 entspricht dann der Filterinformation als Bitmaske 314.

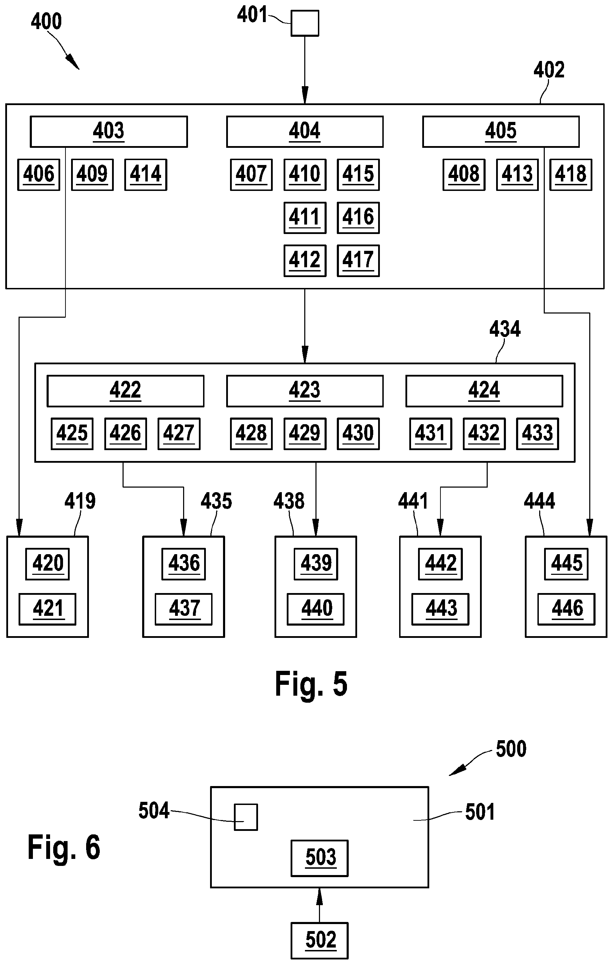

Gemäß einem weiteren erfindungsgemäßen Ausführungsbeispiel kann ein Verfahren auch gemäß der Figur 5 dargestellt werden. Die Figur 5 zeigt eine Baumstruktur 400. In dieser Baumstruktur 400 ist in jedem Knoten eine weitere Filterinformation für die gesuchte zusätzliche Information verfügbar, wobei die Filterinformation codiert ist durch eine Anzahl der Filterinformationscodes, einem Filterinformationscode und einer Anzahl der Informationen oder Suchkriterien im darunter liegenden Knoten.

Der Eingangsdatensatz 401 wird auf den Knoten 402 angewendet, welcher die Suchkriterien 403, 404 und 405 aufweist. Den Suchkriterien 403, 404 und 405 sind weitere Filterinformationen zugeordnet, die codiert sind über jeweils eine Anzahl 406, 407, 408 der Filterinformationscodes, einem Filterinformationscode 409, 410, 411, 412 und 413 und einer Anzahl 414, 415, 416, 417 und 418 der Informationen oder Suchkriterien im darunter liegenden Knoten. Dabei sind im vorliegenden Ausführungsbeispiel die Anzahlen 406, 414, 415, 416, 417, 408 und 418 jeweils 1 und die Anzahl 407 ist 3.

Ist das Suchkriterium 403 und die Filterinformation mit Filterinformationscode 409 erfüllt, so wird als Ergebnis zum Knoten 419 mit dem Ergebnisdatensatz 420,421 weitergeleitet. Der Knoten 419 weist dabei die Namensinformation 420, die als Name_1 bezeichnet ist, und eine zusätzliche Information 421 auf, die als Information_1 bezeichnet ist. Die Information 421 entspricht dann der Filterinformation mit Code 409.

Ist das Suchkriterium 404 und eine der Filterinformationen gemäß Filterinformationscode 410, 411 oder 412 erfüllt, so wird als Ergebnis zum Knoten 434 weitergeleitet. Dieser Knoten 434 weist die Suchkriterien 422, 423 und 424 auf. Den Suchkriterien 422, 423 und 424 sind weitere Filterinformationen codiert zugeordnet, wobei die Filterinformation codiert ist durch eine Anzahl 425, 428 und 431 der Filterinformationscodes, dem Filterinformationscodes 426, 429 und 432 und jeweils einer Anzahl 427, 430 und 433 der Informationen oder Suchkriterien im darunter liegenden Knoten. Dabei ist im vorliegenden Ausführungsbeispiel 425, 427, 428, 430, 431 und 433 jeweils 1.

Erfüllt der Eingangsdatensatz 401 auch das Suchkriterium 422 mit der Filterinformation gemäß Code 426, so wird zum Knoten 435 weitergeleitet. Der Knoten 435 weist dabei die Namensinformation 436, die als Name_2 bezeichnet ist, und eine zusätzliche Information 437 auf, die als Information_2 bezeichnet ist. Die Information 437 entspricht dann der Filterinformation gemäß Code 426.

Erfüllt der Eingangsdatensatz 401 auch das Suchkriterium 423 mit der Filterinformation als Code 429, so wird zum Knoten 438 weitergeleitet. Der Knoten 438 weist dabei die Namensinformation 439, die als Name_3 bezeichnet ist, und eine zusätzliche Information 440 auf, die als Information_3 bezeichnet ist. Die Information 440 entspricht dann der Filterinformation gemäß Code 429.

Erfüllt der Eingangsdatensatz 401 auch das Suchkriterium 424 mit der Filterinformation als Code 432, so wird zum Knoten 441 weitergeleitet. Der Knoten 441 weist dabei die Namensinformation 442, die als Name_4 bezeichnet ist, und eine zusätzliche Information 443 auf, die als Information_1 bezeichnet ist. Die Information 443 entspricht dann der Filterinformation gemäß Code 432.

Erfüllt der Eingangsdatensatz 401 das Suchkriterium 405 mit der Filterinformation gemäß Code 413, so wird zum Knoten 444 weitergeleitet. Der Knoten 444 weist dabei die Namensinformation 445, die als Name_5 bezeichnet ist, und eine zusätzliche Information 446 auf, die als Information_2 bezeichnet ist. Die Information 446 entspricht dann der Filterinformation gemäß Code 413.

Die in den Figuren 3 bis 5 dargestellten Verfahren basieren auf einer Baumstruktur und erbringen einen ausgewählten Datensatz auf Basis eines Eingangsdatensatzes, der Suchkriterien und zusätzlicher Informationen, wobei dieser ausgewählte Datensatz dem Bediener auf einem Anzeigeelement anzeigbar ist, worauf hin der Bediener auf Basis des angezeigten Datensatzes eine weitere Aktion, wie beispielsweise eine Zielfindung per Navigationssystem, starten kann.

Beispiele für solche zusätzliche Informationen können Länder, Bundesländer, Städte, Stadtteile, Richtungen, Postleitzahlen, Art des Punkts des Interesses, wie Museum, Hotel, etc. sein.

Die Figur 6 zeigt eine erfindungsgemäße Vorrichtung 500, wie ein Navigationssystem, in einer schematischen Darstellung 501 mit einem Speicher 502, einem Anzeigeelement 503 und zumindest einem Bedien- oder Eingabeelement 504, wobei Eingangsdaten und zusätzliche Informationen mittels des Bedien- oder Eingabeelements 504 eingebbar sind und ein erfindungsgemäßes Verfahren durchführbar ist. Die Auswahl der Daten einer Datenbank erfolgt erfindungsgemäß, wobei die Daten in einem Speicher 502 vorliegen können, der dabei ein integrierter Speicher oder ein austauschbarer Speicher sein kann, wie z.B. eine CD-ROM oder eine DVD.

Das erfindungsgemäße Verfahren und die erfindungsgemäße Vorrichtung sind nicht auf Navigationssysteme beschränkt, sondern können auch auf andere Anwendungen, wie beispielsweise der Spracheingabe oder -verarbeitung und Filterung, angewandt werden.

## Patentansprüche

1. Verfahren zur Ausgabe von POI-Datensätzen eines Navigationssystems eines Kraftfahrzeuges auf Grundlagen von von einem Bediener eingegebenen Eingangsdatensätzen (201, 301, 401), wobei die Eingabe der Eingangsdatensätze durch den Bediener erfolgt, um einen oder mehrere dazu passende Zieldatensätze zu erhalten, um daraus ein beabsichtigtes Ziel auszuwählen, wobei ein in einer Datenbank vorliegender Datensatzumfang mittels einer Baumstruktur (200, 300, 400) strukturiert ist und Knoten (202, 219; 302, 319; 402, 434) der Baumstruktur, welche keine Endknoten (216, 229; 232, 235, 238; 316, 329, 332, 335, 338; 419, 435, 438, 441, 444) sind, Suchkriterien, um einen POI-Ergebnisdatensatz oder POI-Ergebnisdatensätze zu ermitteln, (203, 204, 205, 220, 221, 222; 303, 304, 305, 320, 321, 322; 403, 404, 405, 422, 423, 424) und weitere Suchkriterien, die weitere Filterinformationen und zusätzliche Auswahlkriterien des POI-Ergebnisdatensatzes oder der POI- Ergebnisdatensätze sind (206, 208, 210, 212, 2134, 223, 224, 225; 306, 308, 314, 323, 324, 325; 409, 410, 411, 412, 413, 426, 429, 432), zugeordnet sind, wobei wenn das Suchkriterium (203, 204, 205, 220, 221, 222; 303, 304, 305, 320, 321, 322; 403, 404, 405, 422, 423, 424) und die ihm zugeordnete weitere Filterinformation (206, 208, 210, 212, 214, 223, 224, 225; 306, 308, 314, 323, 324, 325; 409, 410, 411, 412, 413, 426, 429, 432) erfüllt sind, als Ergebnis ein POI-Ergebnisdatensatz mit einer Namensinformation (217, 230, 233, 236, 239; 317, 330, 333, 336, 339; 420, 436, 439, 442, 445) sowie einer zusätzlichen Information (218, 231, 234, 237, 240; 318, 331, 334, 337, 340; 421, 437, 440, 443, 446), die der zusätzlichen Filterinformation entspricht, weitergeleitet wird, so dass eine Anzeige des Navigationssystems auf den Eingangsdatensatz, der Suchkriterien und der zusätzlichen Filterinformationen basiert.

2. Verfahren nach Anspruch 1, **dadurch gekennzeichnet, dass** die Filterinformation (206, 208, 210, 212, 2134, 223, 224, 225, 306, 308, 314, 323, 324, 325, 409, 410, 411, 412, 413, 426, 429, 432) als Abfrage der zusätzlichen Information dem Knoten (202, 219, 302, 319, 402, 434) zugeordnet ist.

3. Verfahren zu einem der vorhergehenden Ansprüche, **dadurch gekennzeichnet, dass** die Filterinformation als Bitmaske (306, 308, 314, 323, 324, 325) der zusätzlichen Information dem Knoten zugeordnet ist.

4. Verfahren zu einem der vorhergehenden Ansprüche, **dadurch gekennzeichnet, dass** die Filterinformation als Filterinformationscode (409, 410, 411, 412, 413, 426, 429, 432) der zusätzlichen Information dem Knoten zugeordnet ist.

5. Verfahren nach einem der vorhergehenden Ansprüche 2, 3 oder 4, **dadurch gekennzeichnet, dass** der Filterinformation weiterhin eine Information (207, 209, 211, 213, 215, 226, 227, 228, 307, 313, 315, 326, 327, 328, 414, 415, 416, 417, 418, 427, 430, 434) bezüglich einer Anzahl der Suchkriterien oder Filterinformationen im darunter liegenden Knoten zugeordnet ist.

6. Verfahren nach einem der vorhergehenden Ansprüche 4 oder 5, **dadurch gekennzeichnet, dass** der Filterinformation weiterhin eine Information bezüglich einer Anzahl der Filterinformationscodes (406, 407, 408, 425, 428, 431) zugeordnet ist.

7. Verfahren nach einem der vorhergehenden Ansprüche, **dadurch gekennzeichnet, dass** die Ausgabe von ausgewählten Datensätzen als Anzeige auf einer Anzeigeeinheit (503) erfolgt.

8. Verfahren nach einem der vorhergehenden Ansprüche, **dadurch gekennzeichnet, dass** die Eingangsdatensätze von einem Bediener mittels eines Eingabeelements (504) eingegeben werden.

9. Verfahren nach einem der vorhergehenden Ansprüche, **dadurch gekennzeichnet, dass** als Eingangsdatensatz auch ein unvollständiger Datensatz einer Datenbank oder eines Datensatzumfangs ist.

10. Navigationssystem (501) eines Kraftfahrzeuges zur Durchführung des Verfahrens nach einem der vorhergehenden Ansprüche, mit einem Speicher (502), einem Anzeigeelement (503) und zumindest einem Bedienelement (504), bei welcher eine Ausgabe von Datensätzen auf Grundlagen von von einem Bediener eingegebenen Eingangsdatensätzen erfolgbar ist, wobei das Navigationssystem (501) zur Ausgabe von POI-Datensätzen auf Grundlagen von von einem Bediener eingegebenen Eingangsdatensätzen (201, 301, 401) ausgeführt ist, wobei die Eingabe der Eingangsdatensätze durch den Bediener erfolgt, um einen oder mehrere dazu passende Zieldatensätze zu erhalten, um daraus ein beabsichtigtes Ziel auszuwählen, wobei ein in einer Datenbank vorliegender Datensatzumfang mittels einer Baumstruktur (200, 300, 400) strukturiert ist und Knoten (202, 219; 302, 319; 402, 434) der Baumstruktur, welche keine Endknoten (216, 229; 232, 235, 238, 316, 329, 332, 335, 338; 419, 435, 438, 441, 444) sind, Suchkriterien, um einen POI-Ergebnisdatensatz oder POI-Ergebnisdatensätze zu ermitteln (203, 204, 205, 220, 221, 222; 303, 304, 305, 320, 321, 322; 403, 404, 405, 422, 423, 424) und weitere Suchkriterien, die weitere Filterinformationen und zusätzliche Auswahlkriterien des POI-Ergebnisdatensatzes oder der POI-Ergebnisdatensätze sind (206, 208, 210, 212, 2134, 223, 224, 225; 306, 308, 314, 323, 324, 325; 409, 410, 411, 412, 413, 426, 429, 432), zugeordnet sind, wobei wenn das Suchkriterium (203, 204, 205, 220, 221, 222; 303, 304, 305, 320, 321, 322; 403, 404, 405, 422, 423, 424) und die ihm zugeordnete weitere Filterinformation (206, 208, 210, 212, 214, 223, 224, 225; 306, 308, 314, 323, 324, 325; 409, 410, 411, 412, 413, 426, 429, 432) erfüllt sind, als Ergebnis ein POI-Ergebnisdatensatz mit einer Namensinformation (217, 230, 233, 236, 239; 317, 330, 333, 336, 339; 420, 436, 439, 442, 445) sowie einer zusätzlichen Information (218, 231, 234, 237, 240; 318, 331, 334, 337, 340; 421, 437, 440, 443, 446), die der zusätzlichen Filterinformation entspricht, weitergeleitet wird, so dass eine Anzeige des Navigationssystems auf den Eingangsdatensatz, der Suchkriterien und der zusätzlichen Filterinformationen basiert.

11. Navigationssystem nach Anspruch 10, **dadurch gekennzeichnet, dass** der Eingangsdatensatz mittels des Bedienelements (504) eingebbar ist.

12. Navigationssystem nach Anspruch 10 oder 11, **dadurch gekennzeichnet, dass** eine Ausgabe von Datensätzen mittels des Anzeigeelements (503) durchführbar ist.

13. Vorrichtung nach Anspruch 10, 11 oder 12, **dadurch gekennzeichnet, dass** der in der Datenbank vorliegende Datensatzumfang auf einem Speicher (502) speicherbar ist.

14. Vorrichtung nach einem der vorhergehenden Ansprüche 10 bis 13, **dadurch gekennzeichnet, dass** der Speicher (502) ein in der Vorrichtung integrierter Speicher oder ein austauschbarer Speicher, wie eine CD-ROM oder eine DVD, ist.

## Claims

1. Method for outputting POI datasets from a navigation system of a motor vehicle on the basis of input datasets (201, 301, 401) input by an operator, wherein the input datasets are input by the operator so as to obtain one or more matching target datasets, so as to select an intended target therefrom, wherein a dataset scope present in a database is structured using a tree structure (200, 300, 400) and nodes (202, 219; 302, 319; 402, 434) of the tree structure that are not end nodes (216, 229; 232, 235, 238; 316, 329, 332, 335, 338; 419, 435, 438, 441, 444) are assigned search criteria for determining a POI result dataset or POI result datasets (203, 204, 205, 220, 221, 222; 303, 304, 305, 320, 321, 322; 403, 404, 405, 422, 423, 424) and further search criteria that are further filter information and additional selection criteria of the POI result dataset or of the POI result datasets (206, 208, 210, 212, 2134, 223, 224, 225; 306, 308, 314, 323, 324, 325; 409, 410, 411, 412, 413, 426, 429, 432), wherein, if the search criterion (203, 204, 205, 220, 221, 222; 303, 304, 305, 320, 321, 322; 403, 404, 405, 422, 423, 424) and the further filter information (206, 208, 210, 212, 214, 223, 224, 225; 306, 308, 314, 323, 324, 325; 409, 410, 411, 412, 413, 426, 429, 432) assigned thereto are satisfied, as a result a POI result dataset containing name information (217, 230, 233, 236, 239; 317, 330, 333, 336, 339; 420, 436, 439, 442, 445) and additional information (218, 231, 234, 237, 240; 318, 331, 334, 337, 340; 421, 437, 440, 443, 446) that corresponds to the additional filter information is forwarded such that a display of the navigation system is based on the input dataset, the search criteria and the additional filter information.

2. Method according to Claim 1, **characterized in that** the filter information (206, 208, 210, 212, 2134, 223, 224, 225, 306, 308, 314, 323, 324, 325, 409, 410, 411, 412, 413, 426, 429, 432) is assigned to the node (202, 219, 302, 319, 402, 434) in the form of a request for the additional information.

3. Method according to either of the preceding claims, **characterized in that** the filter information is assigned to the node in the form of a bit mask (306, 308, 314, 323, 324, 325) of the additional information.

4. Method according to one of the preceding claims, **characterized in that** the filter information is assigned to the node in the form of a filter information code (409, 410, 411, 412, 413, 426, 429, 432) of the additional information.

5. Method according to one of preceding Claims 2, 3 or 4, **characterized in that** the filter information is furthermore assigned information (207, 209, 211, 213, 215, 226, 227, 228, 307, 313, 315, 326, 327, 328, 414, 415, 416, 417, 418, 427, 430, 434) regarding a number of search criteria or amount of filter information in the underlying node.

6. Method according to either of preceding Claims 4 and 5, **characterized in that** the filter information is furthermore assigned information regarding a number of filter information codes (406, 407, 408, 425, 428, 431).

7. Method according to one of the preceding claims, **characterized in that** the selected datasets are output in the form of a display on a display unit (503).

8. Method according to one of the preceding claims, **characterized in that** the input datasets are input by an operator using an input element (504).

9. Method according to one of the preceding claims, **characterized in that** an incomplete dataset of a database or of a dataset scope is also an input dataset.

10. Navigation system (501) of a motor vehicle for performing the method according to one of the preceding claims, having a memory (502), a display element (503) and at least one operator element (504), in which datasets are able to be output on the basis of input datasets input by an operator, wherein the navigation system (501) is configured to output POI datasets on the basis of input datasets (201, 301, 401) input by an operator, wherein the input datasets are input by the operator so as to obtain one or more matching target datasets, so as to select an intended target therefrom, wherein a dataset scope present in a database is structured using a tree structure (200, 300, 400) and nodes (202, 219; 302, 319; 402, 434) of the tree structure that are not end nodes (216, 229; 232, 235, 238, 316, 329, 332, 335, 338; 419, 435, 438, 441, 444) are assigned search criteria for determining a POI result dataset or POI result datasets (203, 204, 205, 220, 221, 222; 303, 304, 305, 320, 321, 322; 403, 404, 405, 422, 423, 424) and further search criteria that are further filter information and additional selection criteria of the POI result dataset or of the POI result datasets (206, 208, 210, 212, 2134, 223, 224, 225; 306, 308, 314, 323, 324, 325; 409, 410, 411, 412, 413, 426, 429, 432), wherein, if the search criterion (203, 204, 205, 220, 221, 222; 303, 304, 305, 320, 321, 322; 403, 404, 405, 422, 423, 424) and the further filter information (206, 208, 210, 212, 214, 223, 224, 225; 306, 308, 314, 323, 324, 325; 409, 410, 411, 412, 413, 426, 429, 432) assigned thereto are satisfied, as a result a POI result dataset containing name information (217, 230, 233, 236, 239; 317, 330, 333, 336, 339; 420, 436, 439, 442, 445) and additional information (218, 231, 234, 237, 240; 318, 331, 334, 337, 340; 421, 437, 440, 443, 446) that corresponds to the additional filter information is forwarded such that a display of the navigation system is based on the input dataset, the search criteria and the additional filter information.

11. Navigation system according to Claim 10, **characterized in that** the input dataset is able to be input using the operator element (504).

12. Navigation system according to Claim 10 or 11, **characterized in that** datasets are able to be output using the display element (503).

13. Device according to Claim 10, 11 or 12, **characterized in that** the dataset scope present in the database is able to be stored in a memory (502).

14. Device according to one of preceding Claims 10 to 13, **characterized in that** the memory (502) is a memory integrated in the device or an exchangeable memory, such as a CD-ROM or a DVD.

## Revendications

1. Procédé, destiné à éditer des jeux de données POI d'un système de navigation d'un véhicule automobile sur la base de jeux de données d'entrée (201, 301, 401) saisis par un opérateur, la saisie des jeux de données d'entrée s'effectuant par l'opérateur pour obtenir un ou plusieurs jeux de données de destination correspondantes, pour sélectionner à partir de celles-ci une destination envisagée, une étendue de jeux de données présente dans une base de données étant structurée au moyen d'une arborescence (200, 300, 400) et des noeuds (202, 219 ; 302, 319 ; 402, 434) de l'arborescence, qui ne sont pas des noeuds finaux (216, 229 ; 232, 235, 238 ; 316, 329, 332, 335, 338 ; 419, 435, 438, 441, 444) étant affectés à des critères de recherche, pour déterminer un jeu de données POI résultant ou des jeux de données POI résultants (203, 204, 205, 220, 221, 222 ; 303, 304, 305, 320, 321, 322 ; 403, 404, 405, 422, 423, 424) et à des critères de recherche supplémentaires, qui sont des informations de filtrage supplémentaires et à des critères de sélection supplémentaires du jeu de données POI résultant ou des jeux de données POI résultants (206, 208, 210, 212, 2134, 223, 224, 225 ; 306, 308, 314, 323, 324, 325 ; 409, 410, 411, 412, 413, 426, 429, 432), lorsque le critère de recherche (203, 204, 205, 220, 221, 222 ; 303, 304, 305, 320, 321, 322 ; 403, 404, 405, 422, 423, 424) et l'information de filtrage (206, 208, 210, 212, 214, 223, 224, 225 ; 306, 308, 314, 323, 324, 325 ; 409, 410, 411, 412, 413, 426, 429, 432) supplémentaire qui lui est affectée sont satisfaits, en résultat, un jeu de données POI résultant avec une information nominative (217, 230, 233, 236, 239 ; 317, 330, 333, 336, 339 ; 420, 436, 439, 442, 445), ainsi qu'une information supplémentaire (218, 231, 234, 237, 240 ; 318, 331, 334, 337, 340 ; 421, 437, 440, 443, 446) qui correspond à l'information de filtrage supplémentaire étant retransmis, de sorte qu'un affichage du système de navigation se base sur le jeu de données d'entrée, sur les critères de recherche et sur les informations de filtrage supplémentaires.

2. Procédé selon la revendication 1, **caractérisé en ce que** l'information de filtrage (206, 208, 210, 212, 2134, 223, 224, 225, 306, 308, 314, 323, 324, 325, 409, 410, 411, 412, 413, 426, 429, 432) est affectée au noeud (202, 219, 302, 319, 402, 434) sous la forme d'une interrogation de l'information supplémentaire.

3. Procédé selon l'une quelconque des revendications précédentes, **caractérisé en ce que** l'information de filtrage est affectée au noeud sous la forme d'un masque de bits (306, 308, 314, 323, 324, 325) de l'information supplémentaire.

4. Procédé selon l'une quelconque des revendications précédentes, **caractérisé en ce que** l'information de filtrage est affectée au noeud sous la forme de code d'information de filtrage (409, 410, 411, 412, 413, 426, 429, 432) de l'information supplémentaire.

5. Procédé selon l'une quelconque des revendications précédentes 2, 3 ou 4, **caractérisé en ce qu'**à l'information de filtrage est affectée par ailleurs une information (207, 209, 211, 213, 215, 226, 227, 228, 307, 313, 315, 326, 327, 328, 414, 415, 416, 417, 418, 427, 430, 434) concernant un nombre des critères de recherche ou des informations de filtrage dans le noeud sous-jacent.

6. Procédé selon l'une quelconque des revendications précédentes 4 ou 5, **caractérisé en ce qu'**à l'information de filtrage est affectée par ailleurs une information concernant un nombre des codes d'informations de filtrage (406, 407, 408, 425, 428, 431) .

7. Procédé selon l'une quelconque des revendications précédentes, **caractérisé en ce que** l'édition de jeux de données sélectionnés s'effectue sous la forme d'un affichage sur une unité d'affichage (503).

8. Procédé selon l'une quelconque des revendications précédentes, **caractérisé en ce que** les jeux de données d'entrée sont saisis par un opérateur au moyen d'un élément de saisie (504).

9. Procédé selon l'une quelconque des revendications précédentes, **caractérisé en ce qu'**également un jeu de données incomplet d'une base de données ou d'une étendue de jeux de données est un jeu de données d'entrée.

10. Système de navigation (501) d'un véhicule automobile, destiné à réaliser le procédé selon l'une quelconques des revendications précédentes, comprenant une mémoire (502), un élément d'affichage (503) et au moins un élément de commande (504) sur lequel peut s'effectuer une édition de jeux de données sur les bases de jeux de données d'entrée saisies par un opérateur, le système de navigation (501) étant réalisé pour l'édition de jeux de données POI sur les bases de jeux de données d'entrée (201, 301, 401) saisis par un opérateur, la saisie des jeux de données d'entrée s'effectuant par l'opérateur, pour obtenir un ou plusieurs jeux de données de destination correspondant pour sélectionner à partir de ceux-ci une destination envisagée, une étendue de jeux de données présente dans une base de données étant structurée au moyen d'une arborescence (200, 300, 400) et des noeuds (202, 219 ; 302, 319 ; 402, 434) de l'arborescence qui ne sont pas des noeuds finaux (216, 229 ; 232, 235, 238, 316, 329, 332, 335, 338 ; 419, 435, 438, 441, 444) étant affectés à des critères de recherche, pour déterminer un jeu de données POI résultant ou des jeux de données POI résultants (203, 204, 205, 220, 221, 222 ; 303, 304, 305, 320, 321, 322 ; 403, 404, 405, 422, 423, 424) et à des critères de recherche supplémentaires, qui sont des informations de filtrage supplémentaires et à des critères de sélection supplémentaires du jeu de données POI résultant ou des jeux de données POI résultant (206, 208, 210, 212, 2134, 223, 224, 225 ; 306, 308, 314, 323, 324, 325 ; 409, 410, 411, 412, 413, 426, 429, 432), lorsque le critère de recherche (203, 204, 205, 220, 221, 222 ; 303, 304, 305, 320, 321, 322 ; 403, 404, 405, 422, 423, 424) et l'information de filtrage (206, 208, 210, 212, 214, 223, 224, 225 ; 306, 308, 314, 323, 324, 325 ; 409, 410, 411, 412, 413, 426, 429, 432) qui lui est affectée sont satisfaits, en résultat un jeu de données POI résultant avec une information nominative (217, 230, 233, 236, 239 ; 317, 330, 333, 336, 339 ; 420, 436, 439, 442, 445), ainsi qu'une information supplémentaire (218, 231, 234, 237, 240 ; 318, 331, 334, 337, 340 ; 421, 437, 440, 443, 446), qui correspond à l'information de filtrage supplémentaire étant retransmis, de sorte qu'un affichage du système de navigation se base sur le jeu de données d'entrée, sur les critères de recherche et sur les informations de filtrage supplémentaires.

11. Système de navigation selon la revendication 10, **caractérisé en ce que** le jeu de données d'entrée est susceptible d'être saisi au moyen de l'élément de commande (504).

12. Système de navigation selon la revendication 10 ou 11, **caractérisé en ce qu'**une édition de jeux de données est réalisable au moyen de l'élément d'affichage (503).

13. Dispositif selon la revendication 10, 11 ou 12, **caractérisé en ce que** l'étendue de jeux de données présente dans la base de données est susceptible d'être mémorisée dans une mémoire (502).

14. Dispositif selon l'une quelconque des revendications 10 à 13, **caractérisé en ce que** la mémoire (502) est une mémoire intégrée dans le dispositif ou une mémoire interchangeable, telle qu'un CD-ROM ou un DVD.
